# EUROPEAN PATENT SPECIFICATION

(11) **EP 3 791 686 B1**
(45) Date of publication and mention of the grant of the patent: **18.12.2024**
(21) Application number: 19722624.4
(22) Date of filing: 10.05.2019
(51) Int. Cl.: H04W 76/27, H04W 48/02, H04W 48/06, H04W 48/12, H04W 60/00

(54) **UPLINK ACCESS MANAGEMENT CONCEPT**
KONZEPT ZUR VERWALTUNG DES UPLINK-ZUGRIFFS
CONCEPT DE GESTION D'ACCÈS EN LIAISON MONTANTE

(30) Priority: 11.05.2018 EP 18171867
(43) Date of publication of application: 17.03.2021
(73) Proprietor: Fraunhofer-Gesellschaft zur Förderung der angewandten Forschung e.V., 80686 München (DE)
(72) Inventor: WIRTH, Thomas, 10587 Berlin (DE); SCHIERL, Thomas, 10587 Berlin (DE); HELLGE, Cornelius, 10587 Berlin (DE); EBRAHIM REZAGAH, Roya, 10587 Berlin (DE); SEIDEL, Eiko, 81541 München (DE)
(74) Representative: Zimmermann, Tankred Klaus
(86) International application number: PCT/EP2019/062051
(87) International publication number: WO 2019/215331

(56) References cited:
- WO-A1-2017/116115
- WO-A1-2018/008944

## Description

The present application concerns the field of wireless communications, more specifically to an uplink access management concept allowing to disable a user equipment, UE, by a wireless communication network. Embodiments provide a mechanism to switch off a device or groups of devices, especially Internet of things, loT, devices from a network side.

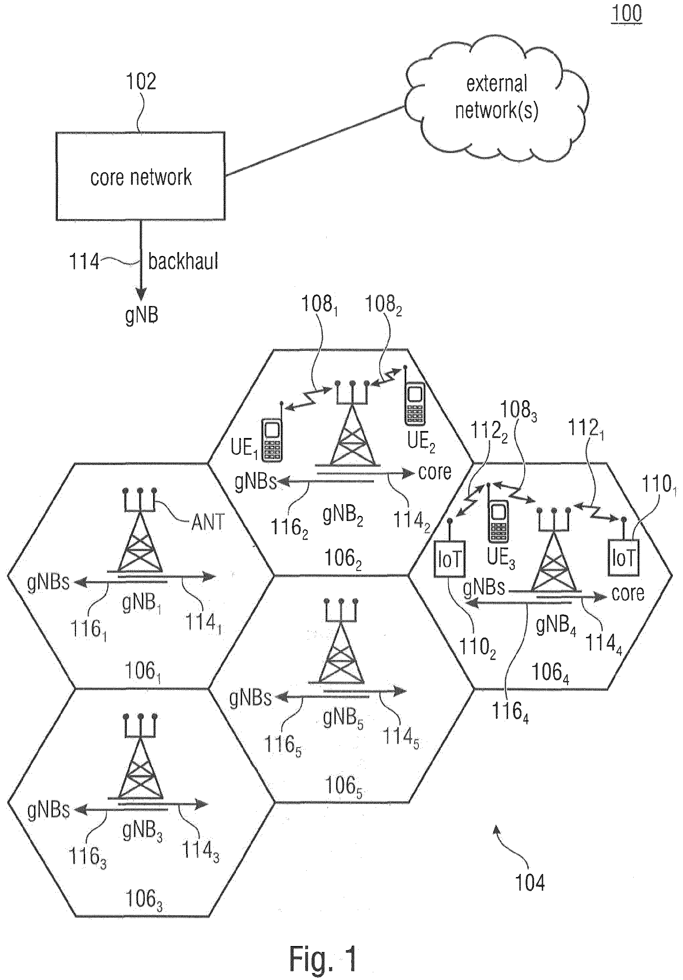

Fig. 1 is a schematic representation of an example of a terrestrial wireless network 100 including a core network 102 and a radio access network 104. The radio access network 104 may include a plurality of base stations gNB₁ to gNB₅, each serving a specific area surrounding the base station schematically represented by respective cells 106₁ to 106₅. The base stations are provided to serve users within a cell. The term base station, BS, refers to as gNB in New Radio (NR) or 5G networks, eNB in UMTS/LTE/LTE-A/ LTE-A Pro, or just BS in other mobile communication standards. A base station can be a stationary device or a mobile device, e.g. it can be a non-terrestrial network element such as a BS placed into an air plane. A user may be a stationary device or a mobile device. Further, the wireless communication system may be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UEs to the base stations gNB₂, gNB₄ or for transmitting data from the base stations gNB₂, gNB₄ to the users UE₁, UE₂, UE₃. Further, Fig. 1 shows two IoT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface in case of EPC or N2 and N3 interfaces in case of 5G core network (5GC), via respective backhaul links 114₁ to 114₅, which are schematically represented in Fig. 1 by the arrows pointing to "core". The core network 102 may be connected to one or more external networks. Further, some or all of the respective base station gNB₁ to gNB₅ may be connected, e.g. via the S1 or X2 interface or XN interface in NR, with each other via respective backhaul links 116₁ to 116₅, which are schematically represented in Fig. 1 by the arrows pointing to "gNBs". The wireless network or communication system depicted in Fig. 1 may by an heterogeneous network having two distinct overlaid networks, a network of macro cells with each macro cell including a macro base station, like base station gNB₁ to gNB₅, and a network of small cell base stations (not shown in Fig. 1), like femto or pico base stations.

For data transmission a physical resource grid may be used. The physical resource grid may comprise a set of resource elements to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. The physical signals may comprise reference signals (RS), synchronization signals and the like. The resource grid may comprise a frame or radioframe having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC) or orthogonal time frequency space (OTFS), may be used. The wireless communication system may operate, e.g., in accordance with the LTE-Advanced pro standard or the 5G or NR, New Radio, standard.

In the wireless communication network as shown in Fig. 1 the radio access network 104 may be a heterogeneous network including a network of primary cells, each including a primary base station, also referred to as a macro base station. Further, a plurality of secondary base stations, also referred to as small cell base stations, may be provided for each of the macro cells. In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-advanced pro standard or the 5G or NR, new radio, standard.

Wireless communication networks or systems as described above may be used, e.g., for a Machine-to-Machine, M2M, communication and in relation to the Internet of Things, loT. For example, besides other technologies, like Near Field Communication, Bluetooth, or WiFi, wireless communication networks or systems as described above providing for a Cellular communication may be used for enabling wireless loT devices. This may be referred to as CloT - cellular loT. There is a huge number of services to be enabled by CloT such as smart cities, connected devices or buildings, mobile health, smart utilities, connected retail, monitoring, or asset tracking.

Several systems have been defined in cellular standards to address the M2M/loT market. For example, following the definition of a low complexity UE in LTE Rel.12, LTE eMTC, extended Machine-Type-Communication, and NB-loT, Narrow-Band-loT, have been defined in LTE Rel.13 as non-backwards compatible systems. These systems support a range of requirements by the introduction of a set of new features. Among others, LTE eMTC and NB-loT support a massive number of devices, overload control, enable ultra low-cost devices, e.g., <5 USD for a module, and reduced power consumption, e.g., up to 10-15 years of battery powered operation. Furthermore, flexible deployment scenarios are envisioned. A deep indoor coverage may be enabled by an improved link budget. Coexistence with other existing or future systems is ensured. NB-loT services may be deployed together with LTE solutions as a Single-RAN (RAN = Radio Access Network), sharing RAN infrastructure as well as core network entities. The first 5G standard (Rel.15) focuses on enhanced mobile broadband (eMBB), and support of cellular loT (CloT) features may follow in future releases.

Millions of loT devices are expected to be deployed in the future. Devices may be sold directly by certain vertical industries, by service providers or by mobile operators. Compared to the traditional business model where phones may be distributed by operators themselves, future business may be conducted by many new stakeholders.

Vertical industries as customer may include car companies, energy providers, retail or transport companies, health insurance or medical care companies etc. Such companies may sign service level agreements (SLAs) with a service provider or with a mobile network operator (MNO). The service provider may own a core network or a part thereof. For instance, a government may own a core network to provide secure public safety services to critical industries. A mobile Virtual Network Operator (VNO) may issue its own SIM cards. Also, in some regions MNOs and Infrastructure Providers (e.g. a tower company) may be separate entities.

Multiple tenants may use the shared network resources which may include core network equipment, radio access network equipment or even spectrum. For example, network slicing is an essential part of future 5G core network (CN) infrastructure. By future use of network slicing the network provider may provide a network slice to users in a transparent way. For example, based on Quality-of-Service (QoS) requirements certain resources may be reserved for the user. Slices may be defined per service, per customer, or per use case. A network slice delivers an End-to-End (E2E) network behavior to a customer or a third party. It is a complete logical network linked to a certain service or tenant that includes core and radio access network elements and may be mapped on the same or on different carrier frequencies. Depending on the service requirements, such slices may or may not support different 5G numerologies. In the 5G core network (5GC), there may be up to 256 different slices configured in a network whereas a UE may only support up to eight different slices at a time. In the 5GC, the slice identity is called Network Slice Selection Assistance Information. At initial attach, the UE connects to a default slice that hosts some common control functions. The network slice selection function assigns specific slices to the UE by assigning the slice identities. These identities are stored at the UE. During each connection setup, the slice identity is provided by the UE to the gNB as assistance information, e.g. to support routing NAS messages to the correct slice specific control plane function. Slice selection at the Network Slice Selection Function (NSSF) may be initiated with the UE attach procedure and at a new session establishment procedure. Among others, the NSSF considers UE usage type, service type, UE capabilities etc. and may check UE identity, authentication and authorization before slice selection. There may also be multiple physical networks supporting multiple Common Control Network Functions (CCNF).

In the scenarios described above, the devices or UEs may access the network at any time, however, there may be situations in which this may not be desired, however, there is no possibility for the network to prohibit a device or UE from an access to the network. For example, the network may not prevent network congestion and overload by loT devices or other devices because the network is always reachable for all UEs. Currently, there are only possibilities for a device or a UE to reduce or avoid connections to the network, e.g., for saving power in case of battery powered devices. Currently, there are several modes for enhancing battery life, like Power Saving Mode (PSM), Extended DRX Cycle (eDRX) mode, and Mobile Initiated Connection Only, MICO, mode.

### PSM

The PSM was introduced in LTE Rel.12 for MTC devices to minimize UE power consumption and enable a battery lifetime of 10 years or even longer. This feature reduces the over the air signaling and minimizes the UE active duration times. If there is no traffic for a particular UE, the UE will transition from RRC CONNECTED to RRC IDLE. The UE still performs the IDLE mode cell selection/reselection procedures. This means that the UE checks for paging regularly and selects the strongest cell during mobility. In case a new cell joins, the system information is reread. In case the system information informs the UE that the base station, like an eNB in LTE, belongs to a new Tracking Area (TA), the UE performs a tracking area update.

The PSM state moves the UE to an even deeper sleep in which the UE is not reachable from the network side for a predefined period. The UE requests from the network to let it move into PSM mode and the network will assign an active time timer. Once the timer expires the UE transitions into PSM mode. While in RRC IDLE the UE is reachable from time to time, but in PSM state the UE is not reachable from network side but may re-connect to the network once the UE requires to connect. Non-delay critical data may be buffered at the network side and may be delivered once the UE is reconnected.

### Extended DRX Cycle Model LTE Rel.

There are some MTC/loT applications where the network still needs to reach a UE. In PSM, the UE may save significant power, but the UE is not reachable anymore. With the Discontinuous Reception (DRX) feature, a UE may be kept RRC CONNECTED, connected DRX (C-DRX), and still save battery consumption. Only during an ON duration, the UE monitors the PDCCH resource allocations, while the UE may switch off during the DRX Sleep Period. Nevertheless, the LTE DRX cycle is limited to 2.56s in LTE Rel. 12 and thus an extended DRX (eDRX) was introduced in LTE Rel.13. In eDRX, a UE may remain in DRX mode for hours or days until it checks the PDCCH resource allocations.

### MICO Mode / 5G Rel. 15

5G Rel.15 introduces a new state which is called Mobile Initiated Connection Only (MICO) mode. In this mode the UE is not reachable from the network side. The purpose is mostly to support extreme UE power saving, since the UE does not have to receive any information from the network.

In all modes described above, the UE is set into a mode in which the UE is not reachable from the network side but the UE may reconnect to the network at any time.

WO 2017/116115 A1 describes a method for establishing a bearer for the transmission of user data in a user plane based cellular Internet of Things (CloT) in a wireless communication system, and a device supporting the same. A base station receives a tracking area update (TAU) request message from a terminal, transmits, to a mobility management entity (MME), an initial UE message including the TAU request message, receives, from the MME, a downlink NAS transport message including a resume indication, and can transmit, to the MME, a UE context resume request message on the basis of the resume indication.

WO 2018/008944 A1 describes a method and a device for managing registration in a wireless communication system. More particularly, a method, for managing registration in a wireless communication system, performed by a user equipment (UE) which cannot be paged by means of a network and does not perform a periodic registration area update can comprise the steps of: receiving a timer value for managing the deregistered state of a UE from a network during a registration procedure; starting a timer if the UE enters an idle state; and the UE entering the deregistered state if the timer expires.

It is noted that the information in the above section is only for enhancing the understanding of the background of the invention and therefore it may contain information that does not form the prior art that is already known to a person of ordinary skill in the art.

Starting from the prior art discussed above, it is an object underlying the present invention to provide an improved approach for disabling a user or user equipment from a network side.

This object is achieved by a user equipment as defined in claim 1, by a wireless communication system as defined in claim 13 and by a method as defined in claim 14.

Embodiments of the present invention are now described in further detail with reference to the accompanying drawings, in which:
- Fig. 1: shows a schematic representation of an example of a terrestrial wireless communication system;
- Fig. 2: is a schematic representation of a wireless communication system for communicating information between a transmitter, which may operate in accordance with the inventive teachings described herein, and a plurality of receivers, which may operate in accordance with the inventive teachings described herein;
- Fig. 3: illustrates an UE registration state machine and the respective NAS states, including the RM-REGISTRATION-SUSPENDED state implemented in accordance with examples;
- Fig. 4: illustrates a Group De-Registration Procedure in accordance with an example;
- Fig. 5: illustrates the relaying of registration management messages via the PC5 interface in accordance with examples;
- Fig. 6: illustrates a Connection Mode (CM) state diagram within a RM-REGISTERED state (see Fig. 3) implementing a Network Initiated Connection Only (NICO) mode in accordance with embodiments of the present invention; and
- Fig. 7: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned.

In a cellular wireless network, like a network described above with reference to Fig. 1, a customer may sign a service level agreement (SLA) with a service provider or a mobile network operator (MNO). In 5G networks, the customer may use a network slice of the operator and pay a monthly fee depending on the agreed charging schema. For example, for massive loT networks, the service provider may release 10.000s or more UEs to its customer. All involved providers, like infrastructure provider, service provider and/or MNO, ensure service continuity over the agreed time period. While todays service contracts in the cellular industry for eMBB services may mostly be short term based, e.g. based on a (bi)-yearly spin of new smart phones, the business model employing a massive umber of CloTs may be very much different. The business model employing a massive number of CloTs may be conceived to last a substantial period of time, for example, such a business model may run 10-15 years or longer. However, the success of a business is not ensured. Companies may be sold or merged, an involved customer or provider may file for bankruptcy over the given time period. In such a case, the devices are still deployed out in the field, but the MNO does not receive payments anymore or needs to adapt to a new business model. Other examples are:
- bankruptcy of a vertical industry;
- end of a limited duration rental to a vertical industry;
- termination of the rent in the middle of a limited or unlimited rental contract for any change in the business;
- transferring the ownership of the devices, like sensors;
- any change in the business or service (change of operator, change of infrastructure provider, or service provider, change of frequency license, migration to a different infrastructure topology);
- disposal of the devices, like sensors, for any reason.

At this time, there is a limited mechanism to de-register single UEs from the network. Nevertheless, currently there is no mechanism to switch off more devices or groups of devices from the network side. During regular operation, this is not a problem, since the network may not assign physical resources to these UEs. However, in case an loT service provider with a massive number loT deployment resigns, there are thousands or millions of devices basically out of control. These devices may eventually leave their sleep mode, e.g., PSM, MICO mode, eDRX, etc., and start transmitting to a network.

For example, in CloT the UE is mostly in a power saving mode, PSM, and the uplink radio interface and thus transmitting data traffic is, for example, controlled by an application, like a software, a service and/or an operating system, running on the device. Thus, the exact time for radio access of an CloT-UE is not known by the MNO. The customer or the service provider may be able to update the application software or the firmware of the device to disable the device, but if this customer or operator loses access, like the legal access, to control the CloT devices, there is no way for the MNO or for the infrastructure provider to access the device and to stop such devices from accessing the radio and network resources. The existing MTC/loT enhancements such as extended DRX (eDRX) cycle and PSM target UE power savings. The side effect is that power saving modes also reduce the time periods that a UE checks for paging/system information updates and/or to relieve the UE from sending tracking area updates (TAUs). A permanent deregistration of a UE or a group of UEs is critical, since the original state of the (CloT)-UE may not be restored by the network.

In accordance with other scenarios, an operator may want to temporarily suspend a UE or a group of UEs to send anything in the uplink. This may happen in various scenarios. The scenarios may be rare, but critical overall due to the huge amount of loT devices in the field. If there is a security concern, certain device types or certain software, SW, releases on the devices may need to be disabled temporarily to resolve a problem, e.g., develop a SW update that fixes this problem and update the devices, or to avoid malicious behavior.

The general problem may be that the operator may desire to prevent a specific UE or a specific group of UEs from accessing the system temporarily. Access control solutions like access class barring (ACB) are available [3GPP TS 22.011] but may not be sufficient or suitable. For instance, if regular devices of a group are blocked, it may happen that other devices are blocked as well. In addition, there may still be exceptions where devices, even if they are blocked by the ACB scheme, may access the system e.g., for an emergency call, a conversational service or a mission critical service. Access class barring (ACB) may support the barring of certain services, or slices, or certain UEs or user types. Although a large number of access classes and access categories are defined and may even be customized by an operator, this scheme is not sufficient to block access of UEs for large number of user groups. The number of vertical customers may be much larger than the number of configurable slices or access categories.

Further, the operator may be separated from the application provider and thus may not have any direct access to the application on the UE that may trigger the UE to transmit data packets. In such scenarios, a main issue for the operator may be that the RACH channel is used by IoT devices. Although the devices are rejected they still consume resources and are a burden to the system.

In the state of the art (SoA) networks and standards, the network may trigger deregistration of such devices through unicast deregistration signaling from a core network. Such a mechanism is not a solution to this problem for two reasons. First, in loT business use cases the number of such devices may be huge (in the order of tens of thousands or millions) and unicast deregistration of them is not efficient from network and wireless resources point of view. Second, in the SoA deregistration, no mechanism is considered to stop or suspend the device from any type of reaching for the network until the network annuls that suspension.

In other words, at this time, the operator or another authority does not have a possibility to stop or suspend a device, a number of devices, or all devices until a solution is found, e.g., payments are resumed for the service, new contracts are established, software updates are completed, etc., or to define times during which no uplink activity is allowed for certain UEs or UE groups.

The present invention is based on the recognition of the above drawbacks of conventional approaches in which only the UE may not reachable by the network, and provides an approach in accordance with which the network is not reachable at all by any prohibited UE, which has to wait until this prohibition is revised by the network. The inventive approach is advantageous as, opposite to conventional approaches, the network is not reachable at all by prohibited UEs, which have to wait until this prohibition is revised by the network so that, e.g., network congestion and overload caused by loT devices may be prevented by prohibiting at least temporarily access of a UE to the network.

The inventive approach is advantageous as it provides a revisable or reversible mechanism for temporarily denying a UE or a group of UEs access, thereby avoiding the drawbacks of a permanent barring or deregistration of a UE or a group of UEs, like (CloT)-UEs, since following the permanent barring or deregistration the original state of (CloT)-UEs may not be restored by the network.

The inventive approach is advantageous as it introduces group-cast/multi-cast/broad-cast signaling for stopping or suspending a group of UEs, which is in specially advantageous in loT scenarios and use cases that possibly have to deal with a massive number of devices.

The inventive approach is advantageous as, in some cases, a group of loT devices may be separated from the whole set of loT devices, and in other cases, a number of loT devices may be barred over a longer time period or prevented from radio access completely until access is granted again by the network. For example, sensors/devices may be suspended or disabled for an arbitrary duration of time and then all or a group of them may be reactivated and used in another MNO, another infrastructure, or another vertical industry. Further, the inventive approach may avoid a pollution of the network by roaming CloT devices.

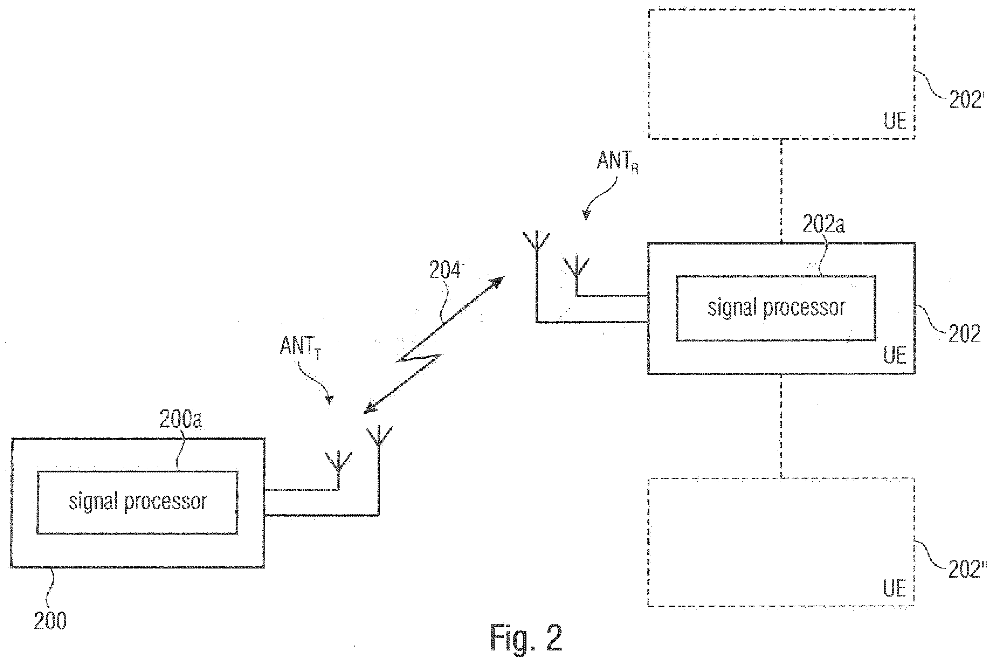

Embodiments of the present invention may be implemented in the wireless communication system or network as depicted in Fig. 1 including transmitters or transceivers, like base stations, and receivers or users, like mobile or stationary terminals or loT devices, as mentioned above. Fig. 2 is a schematic representation of a wireless communication system for communicating information between a transmitter 200, like a base station, and a plurality of receivers 202, 202', 202", like UEs, which are served by the base station 200. The base station 200 and the UEs 202 may communicate via a wireless communication link or channel 204, like a radio link. The base station 200 includes one or more antennas ANT_{T} or an antenna array having a plurality of antenna elements, and a signal processor 200a. The base station 200 may operate in accordance with the inventive teachings described herein. The UEs 202 include one or more antennas ANT_{R} or an antenna array having a plurality of antenna elements, and a signal processor 202a. The respective UEs 202, 202' and 202" of Fig. 2 may operate in accordance with the inventive teachings described herein.

### User Equipment

In accordance with embodiments, the inventive approach provides a user equipment, UE, 202. The UE 202 accesses the wireless communication network, and responsive to a certain signaling 204 from the wireless communication network, the UE 202 enters a state in which any transmission by the UE 202 to the wireless communication network is prohibited. The UE 202 leaves the state only when the state is annulled by the wireless communication network. Responsive to the certain signaling from the wireless communication network, the UE is configured enter a Network Initiated Connection Only, NICO, mode in which the UE is put into or kept in the RM-REGISTERED state and put into the CM-IDLE state, and when operation in the NICO mode
- the UE is configured to not try to reach the wireless communication network, and
- the UE is configured to listen to/search for a NAS signaling or a paging from the wireless communication network only within one or more set/configured time periods or listening periods.
Thus, a user equipment, UE, may be provided which is configured to access a wireless communication network, and, responsive to a certain signaling from the wireless communication network, the UE or a group of such UEs is/are configured to enter a state in which any transmission by a particular UE belonging to this group to the wireless communication network is prohibited. The UE is configured to leave the state only when the state is annulled by the wireless communication network.

In accordance with embodiments, the UE is configured by system information with uplink resources for a random access channel.

In accordance with embodiments, the UE is configured to be registered with the wireless communication network using an attach procedure.

In accordance with embodiments, the certain signaling is provided only (a) after an initial attach procedure, or (b) during the attach procedure. The attach procedure may by specific procedure, for example, when a UE is being switched On. The attach procedure may include the registration of the UE and, in accordance with embodiments also a re-registration procedure.

In accordance with embodiments, the certain signaling causes the UE to stop permanently or to temporarily suspend any transmission by the UE to the wireless communication network. In accordance with such embodiments, the UE may move to a suspension state or to a deactivated state from any of a "RM-REGISTERED" state and a "RM-DEREGISTERED" state.

In accordance with embodiments,
- in case of a permanent stop, the UE is configured to resume regular UE operation or to resume UE re-configured operation responsive to a resume signaling from the wireless communication network, and
- in case of a temporal suspension the certain signaling includes an indication of the duration of the state, and the UE is configured to resume regular UE operation or to resume UE re-configured operation
   - responsive to a resume signaling from the wireless communication network during the duration of the state, or
   - responsive to the end of the duration of the state, or
   - responsive to a signaling of physical resources to be used for a random access to the wireless communication network, or
   - responsive to a certain type of signaling/message.
In accordance with such embodiments, the UE may resume operation, either using an existing configuration, which is referred to as resuming regular UE operation, or a new configuration, which is referred to as resuming UE re-configured operation. In the latter case, the UE may be told by the network to resume operation, but change to a different carrier frequency, resume with a different UE context, etc.

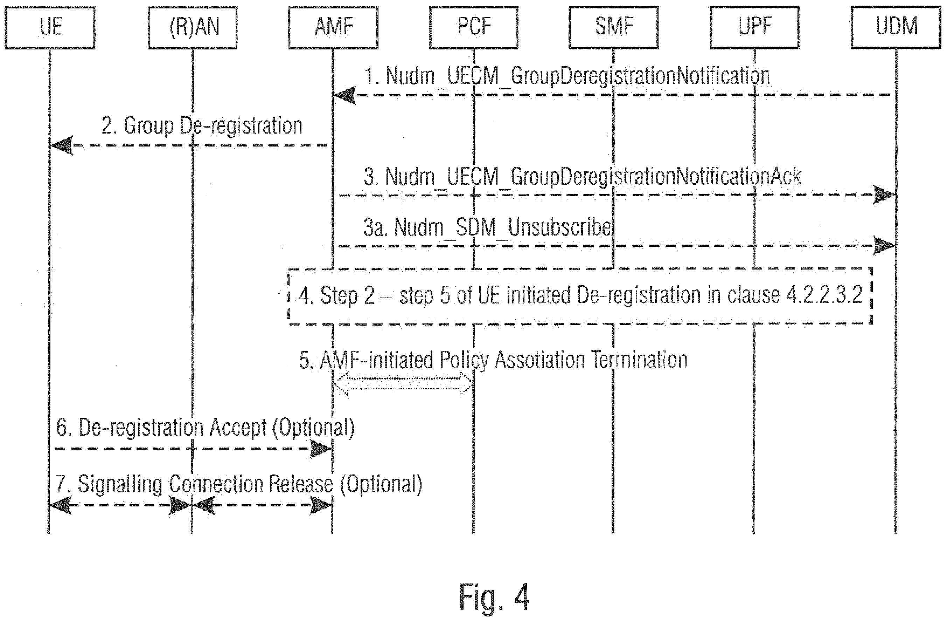

In current 3GPP 5G core networks, the deregistration is network-triggered or UE-triggered, but the registration procedure is exclusively UE-triggered. Therefore, embodiments provide a registration resume signaling, e.g. paging, or a newly defined registration resume signal, or a UE Reachability Notification Request Procedure which is triggered by Unified Data Management (UDM) (or equivalently HSS in EPC)[3GPP TS 23.502, clause 4.2.5.2]. Other possibilities for implementing the registration resume signaling include using a Network Triggered Service Request [3GPP TS 23.502, clause 4.2.3.3), or a UE Configuration Update procedure [3GPP TS 23.502, clause 4.2.4.2 and figure 4.2.4.2-1].

The certain type of signaling/message may include paging, broadcast or multicast messages, and such a message may also contain a certain root cause that identifies the resume signal.

In accordance with embodiments, the UE remains in the NICO mode until the NICO mode is deactivated by the NAS signaling or the paging from the wireless communication network.

In accordance with embodiments, the UE has no possibility to reject to be moved into the NICO mode.

In accordance with embodiments, when being in NICO mode, the UE is configured to
- deactivate the access stratum for a transmission or any 5G radio transmission functionality, or
- reject a packet received from a higher layer for an uplink transmission, wherein the NAS layer may inform a higher layer, e.g., the application layer, about the cause to reject the packet transmission, or
- buffer a packet until the NICO mode is suspended, or
- check, at configured time instances, for the NAS signaling or the paging from the wireless communication network, or
- perform, responsive to an explicit request from the wireless communication network, a Registration Update procedure to provide information about the availability of the UE to the wireless communication network, or
- perform, responsive to an explicit request form the wireless communication network, a Service Request procedure to transition from CM-IDLE to CM-CONNECTED state, or
- to resume regular UE operation or to resume UE re-configured operation responsive to a resume signaling from the wireless communication network.

In accordance with embodiments, the certain signaling causing the UE to enter into the NICO mode is received during an initial registration procedure, during a registration update procedure or during a configuration update procedure performed by the UE.

In accordance with embodiments, the certain signaling comprises a NICO Mode Information Element, NICO-IE, provided from the wireless communication network, e.g., from an Access and Mobility Function, AMF, and/or a Session Management Function, SMF, of the wireless communication network, and send to the UE via a transmitter, like a base station (e.g. gNB), or via a neighboring UE via a side link, like the PC5 interface.

In accordance with embodiments, the NICO-IE comprises one or more of:
- timing information indicating time instances at which the UE is allowed to decode wireless communication network related signaling, or
- the time/frequency/spatial resource at which the UE is allowed to decode wireless communication network related signaling, or
- pre-configured DRX or PSM configuration parameters for power saving, or
- a list of exceptional services or situations for which uplink access to the wireless communication network is allowed, e.g., an emergency call, a voice call etc., or
- a validity timer indicating until when the NICO mode is applicable, or
- an indication that the whole wireless communication network, e.g. PLMN, forms an AMF serving area.

In accordance with embodiments, the user equipment comprises
a data processing unit configured to run a certain application, wherein the wireless communication network has no access to the application for modifying or controlling the certain application; and
a radio unit configured to access the wireless communication network, wherein the transmission by the UE to the wireless communication network using the radio unit is controlled by the certain application.

In accordance with embodiments, the user equipment comprises one or more of:
- a mobile or stationary terminal,
- cellular IoT-UE
- an loT device,
- a ground-based vehicle,
- an aerial vehicle,
- a drone,
- a building, or
- any other item or device provided with network connectivity enabling the item/device to communicate using the wireless communication network, like a sensor or actuator.

### System

In accordance with yet other embodiments the inventive approach provides a wireless communication system, comprising a plurality of the inventive UEs, and one or more of the network entities.

In accordance with embodiments, a network entity comprises one or more of:
- a macro cell base station, or
- a small cell base station, or
- a UE, or
- an AMF, or
- an SMF, or
- a core network entity, or
- any transmission/reception point (TRP) enabling an item or a device to communicate using the wireless communication network, the item or device being provided with network connectivity.

### Methods

In accordance with yet other embodiments the inventive approach provides a method, comprising
responsive to a certain signaling from a wireless communication network, moving one or more of a plurality of UEs, which are configured to access a wireless communication network, into a state in which at least any transmission by the UE to the wireless communication network is prohibited such that the wireless communication network is not reachable by the UE,
wherein the UE leaves the state only when the state is annulled by the wireless communication network,
wherein, responsive to the certain signaling from the wireless communication network, the UE is configured enter a Network Initiated Connection Only, NICO, mode in which the UE is put into or kept in the RM-REGISTERED state and put into the CM-IDLE state, and
when operation in the NICO mode
   - the UE is configured to not try to reach the wireless communication network, and
   - the UE is configured to listen to/search for a NAS signaling or a paging from the wireless communication network only within one or more set/configured time periods or listening periods.

### Computer Program Product

The present invention provides a computer program product comprising instructions which, when the program is executed by a computer, cause the computer to carry out the one or more methods of in accordance with the present invention.

### Registration Management (RM)

In accordance with embodiments, the core network (CN) may communicate with a UE or a UE group via the NAS protocol (e.g. registration management (RM)) to stop operation permanently or to suspend operation for a certain time period. For example, a UE may be instructed not to access the system starting with time t1, until t2 has passed, or alternatively, until further signaling is received which allows the UE to access the system again. This signaling may be received via the gNB from the CN, or via PC5 from a neighboring loT device.

Examples define a new state: the RM-REGISTRATION-SUSPENDED state. The RM-REGISTRATION-SUSPENDED is provided in addition to the RM-REGISTERED state and the RM-DEREGISTERED state so as to close a gap because the RM-DEREGISTERED state is not sufficient for preventing a UE or a group of UEs from sending uplink requests.

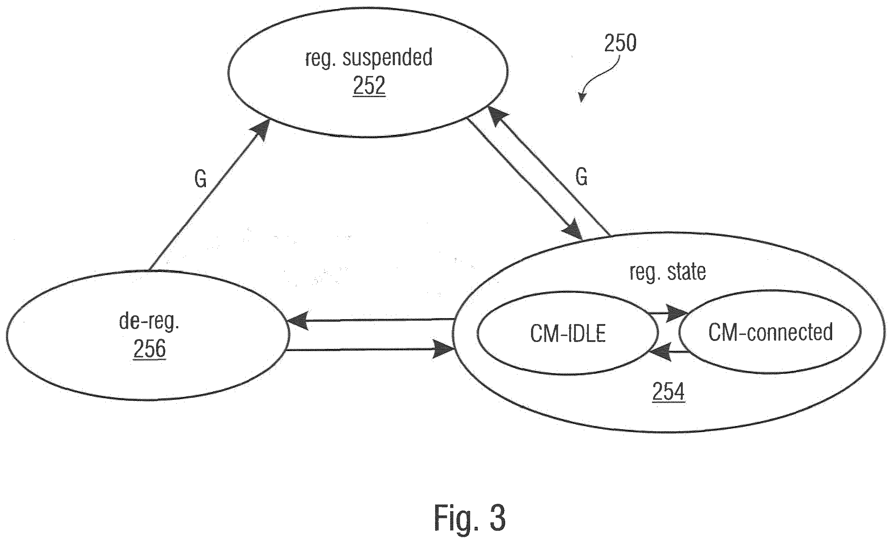

Fig. 3 illustrates the UE registration state machine 250 and the respective NAS states, including the new RM-REGISTRATION-SUSPENDED state 252. The Registration Management (RM) is used to register or deregister a UE/user with the 5G system (5GS) and establish the user context in the 5GS. Currently two RM states are defined:
- RM-REGISTERED 254, or
- RM-DEREGISTERED 256.

These states are defined within the UE and within the network. When the UE is in the RM-REGISTERED state 254 the core network has the UE's context. The UE may stay in the RM-REGISTERED state 254 where it may perform a registration update, e.g.:
- a mobility Registration Update procedure, or
- a periodic Registration Update procedure, or
- in case of an update of the UE, an update of the UE capability information or a re-negotiation of protocol parameters with the network.

A move of the UE to the RM-DEREGISTERED state 256 may be initiated:
- by the UE:
   ∘ the UE may decide to deregister from the network at any time, or
- by the core network:
   ∘ when the network sends a Registration Reject message, or
   ∘ when the network sends a Deregistration message.
      In both cases above, the network message may include a "cause value" indicating why the core network initiated the moving of the UE into the RM-DEREGISTERED state 256.

In the RM-DEREGISTERED state 256, the UE context in the Access and Mobility Function, AMF, holds no valid location or routing information for the UE so the UE is not reachable by the AMF. In the RM-DEREGISTERED state 256, the UE may:
- attempt to register with the selected Public Land Mobile Network, PLMN, using the initial registration procedure if it needs to receive service that requires registration, or
- remain in the RM-DEREGISTERED state 256 when receiving a Registration Reject upon initial registration, or
- enter the RM-REGISTERED state 254 upon receiving a Registration Accept.

However, the RM-DEREGISTERED state 256 does not prevent the UE from sending uplink requests. For example, if the UE detects or decides to receive a service, it may initiate a registration procedure. If the network responds with Registration Reject, the UE remains in the RM-DEREGISTERED state 256. However, the UE may initiate the registration procedure again, e.g. upon receiving some uplink data from its application. Thus, the RM-DEREGISTERED state 256 does not enforce a suspension or dormancy to the UE.

In accordance with the described example, the new state "RM-REGISTRATION-SUSPENDED" is implemented, and when the UE receives a suspension message from the network, the UE enters the RM-REGISTRATION-SUSPENDED state 252 as is indicated at "G" in Fig. 3. The suspension message may be a deregistration message with a special "cause value".

In RM-REGISTRATION-SUSPENDED state 252
- the UE does not try to reach the network. For example, even it receives some uplink data from its higher layers, it either withdraws the data or puts the data in a buffer, but does not initiate a registration procedure to transmit the data, and
- the UE listens to/searches for a registration resume signaling from the network only within some set/configured time periods. Depending on a specific business model or a certain use case, the intervals between such listening periods may be as long as days or even several months for example.

In accordance with other examples, rather than defining the new state "RM-REGISTRATION-SUSPENDED state", the existing RM-DEREGISTERED state may be modified or extended to cover the suspension functionality and configuration. For example, a specific "cause value" may defined which indicates that the UE operation is to be suspended. When a UE receives a deregistration message from the network including the specific "cause value" in the message, the UE enters the RM-DEREGISTERED state and suspends any future registration attempts. In such a case:
- the UE does not try to reach the network. For example, even it receives some uplink data from its higher layers, it either withdraws the data or puts the data in a buffer, but does not initiate a registration procedure to transmit the data, and
- the UE listens to/searches for a registration resume signaling from the network only within some set/configured time periods. Depending on a specific business model or a certain use case, the intervals between such listening periods may be as long as days or even several months for example.

When signaling the UE to enter the RM-REGISTRATION-SUSPENDED state or the extended RM-DEREGISTERED state, in accordance with examples, the UE may be ordered for a permanent stop of operation, and the UE may be ordered or forced to
- resume regular UE operation responsive to a resume signaling from the wireless communication network, and/or
- delete all its protocol context at NAS and RRC layer (e.g. security keys and security context, assigned slice identities) and store the context for future resumption, and/or
- drop all arriving uplink packets at the UE side, and/or
- check for a certain NAS / RRC message (e.g. paging or RAN notification message or Resume notification message) at predefined times (e.g. next time to check after a certain period of time at a specific predefined date) and switch off the receiver chain at other times.

In accordance with other examples, when signaling the UE to enter the RM-REGISTRATION-SUSPENDED state or the extended RM-DEREGISTERED state, the UE may be ordered to temporarily suspend operation, and the UE may be ordered or be forced to
- resume regular UE operation
   ∘ responsive to a resume signaling from the wireless communication network during the duration of the state, or
   ∘ responsive to the end of the duration of the state, the certain signaling including the indication of the duration of the state,
   ∘ responsive to a signaling of physical resources to be used for a random access to the wireless communication network, or
   ∘ responsive to a certain type of signaling/message, and/or
- suspend operation of radio transmission and reception within a given time interval Δt, or when a certain time instance is reached, or when a certain period following the receipt of the signaling is reached, and/or
- temporarily suspend transmission capabilities even at arrival of new uplink packets, and/or
- delete all its protocol context at NAS and RRC layer (e.g. security keys and security context) and store the context for future resumption, and/or
- buffer any arriving packet in the UE buffer until the network annuls the suspended state and allows UE to resume regular operation, and/or
- check for a certain NAS / RRC message (e.g. paging or RAN notification message or Resume notification message) at predefined times (e.g. next time to check after a certain period of time at a specific predefined date) and switch off the receiver chain at other times.

The network may configure the UE or a group of UEs with a time interval selected out of a set of time intervals, where the decision may only be annulled by the network. For example, the UE or group of UEs may, at this configured time instances, check for the certain signaling, e.g., certain messages, from the network. The network may use UE specific signaling, or broadcast or multi-cast signaling to all or a group of UEs. In accordance with other examples, the network may use the paging procedure. Once the suspend state is annulled the regular UE operation and transmission procedure may be resumed. Resuming the regular operation may involve one or more of the following:
- the UE may be configured with additional time instances where additional signaling messages may be received by the network, and/or
- the UE may need to be authorized, authenticated/authorized newly, e.g. by the AMF, and/or
- the UE may be signaled an explicit time when it is allowed to access the network,
- the UE may draw a random back off time within a given range when it is allowed to access the network, and/or
- the UE may signal its old slice identity to the network or may be signaled a new slice identity from the network, and/or
- the UE may provide a resume identity to the network and may be signaled a resume identity from the network. Based on the resume identity the UE context in the UE, the gNB and the AMF may be restored and operation may be continued.

In accordance with examples, for moving a group of UEs into the RM-REGISTRATION-SUSPENDED state or into the extended RM-DEREGISTERED state, the network may employ a common procedure, instead of an individual per UE procedure. For example, based on network decision, a group of UEs (e.g. certain device types, of a certain customer, receiving certain services, belonging to a certain slice) may be moved into the RM-REGISTRATION-SUSPENDED state or into the extended RM-DEREGISTERED state using a Group De-Registration Procedure employing a Group De-Registration message.

Fig. 4 illustrates the Group De-Registration Procedure in accordance with an example. The Group De-Registration Procedure employs the Group De-Registration message which is sent via multicast or broadcast signaling from the AMF via the RAN to the UEs of the group. In accordance with examples, there may not be any other handshake message exchange such as a deregistration Accept or Signaling Connection Release message, so as to avoid too much signaling overhead. The Group-De-Registration message is always initiated by the network.

The AMF may either initiate the procedure explicitly (e.g. by OAM intervention) or the User Data Management, UDM, may trigger the procedure for operator-determined purposes to request the removal of the particular UEs subscriber context and potential Protocol Data Unit, PDU, sessions of the UEs which are to be removed/suspended. In the Group De-Registration message, a specific cause or parameter or "cause value" may be indicated from the UDM to the AMF and/or from the AMF to the UE(s). The removal reason may be set to e.g. Subscription Withdrawn, Subscription Suspended etc. The exact cause value (e.g. integer value / error code) maps the cause (similar as in http://prerak.com/tag/cause-codes-umts-lte-3gpp/, http://niviuk.free.fr/lte_nas.php) to a detailed event. The cause value may also signal further mandatory or optional steps following the de-registration procedure, e.g. a required action from UE or RAN, see steps 6. or 7. In another example, a certain cause value may trigger a different reaction by the UE or RAN network, e.g. a UE may indicate via PC5 to surrounding UEs to de-register as well.

In accordance with examples, a part of the Group De-Registration message indicates to the UE, that the UE is not allowed to access the network anymore. In accordance with other examples, additional configuration parameters may be transmitted, e.g.
- that full operation (rx and tx) must be stopped temporarily or permanently,
- that only transmission must be stopped temporarily or permanently,
- that the UE may receive paging or some other network signaling at predefined intervals.

If the UEs are in RRC-IDLE mode, this procedure may involve a paging procedure triggered by the AMF. The UEs may or may not have established PDU sessions that may need to be released before deregistration is completed (step 4 in Fig. 4).

In case of a multicast without confirmation, it may not be ensured that all the UEs received the deregistration message. Multiple retransmissions may be performed to increase the likelihood of reception. An indication may be given from the 5GC to the gNBs that the transmission may be done very reliable (e.g. using a specific coverage enhancement level), via unicast, multicast or broadcast. If the message is not received a UE may eventually reconnect to the network, and the network may at this time complete the deregistration procedure.

In accordance with examples, a suspend state of a group of UEs may be annulled by the network using a common procedure, instead of an individual per UE procedure, e.g., Group Registration Resume Procedure signaling to the group if UEs that the suspended state is annulled.

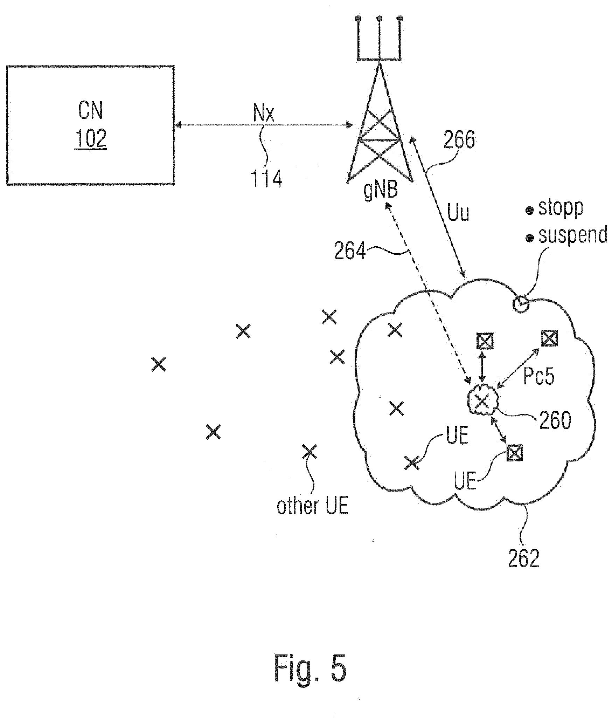

In accordance with further example, the group management may be performed via a sidelink interface, like the PC5 interface. Fig. 5 illustrates the relaying of registration management messages via the PC5 interface in accordance with examples of the present invention. As is illustrated in Fig. 5, at least one UE 260 within a group of UEs (see the circle 262), which is currently in the RRC-connected-mode/inactive mode, is notified about a Group-De-Registration process from the base station eNB (see the double-headed, dotted arrow 264). The other UEs may be in a sleep mode. The configuration of Fig. 5 may be a master-slave configuration. For example, a pre-defined set of UEs, like UEs with a certain authority level or UEs of a certain UE type may act as master UE. The master UE 260 may use the PC5 interface to unicast/multicast/broadcast via a device-to-device interface to neighboring UEs information about the suspend / resume / stop status. In this way, the UE 260 acts as relay with the benefit, that it may transmit with less energy to its surrounding UEs. Furthermore, the neighboring UEs may signal with less energy their activity status before performing a PRACH to the network. The UE 260 may be a single UE or also a group of UEs and may be reached by the RAN via Uu using unicast / multicast / broadcast messages 266.

In accordance with yet further examples different types of signaling may be employed. For example, a network entity, like the gNB / RAN / OAM, may perform a "smart tracking" of the PSM / eDRX cycles of UEs. Depending on the UE's specific wake-up times, the network entity, e.g. the gNB, may decide on the type of signaling to choose to deregistration/suspend/resume the particular set of UEs. For example, if the set of UEs is small, the gNB may use a unicast signaling, if the group is large, the gNB may use multicast or broadcast signaling. Depending on the size of the group, the gNB may divide the group of UEs into several multicast groups, in order optimize signaling. In accordance with another example, if a UE or group of UEs wakes up from PSM/eDRX and transmits a message in the uplink (e.g. asks for a resource grant, confirms a deregistration message, etc.), this may trigger the gNB or RAN to unicast/multicast/broadcast another deregistration/resume/stop message to another UE or group of UEs. If a UE/group of UE implements wake-up receivers, they may be utilized by the network, e.g., gNB, RAN, master UE, other UEs via PC5, to suspend/resume/stop other (CloT)-UEs.

The AMF may allow to receive a deregistration message (step 6 in Fig. 4) in a certain time window or signal to the UEs to respond in a given time period, e.g. randomly picking from a time period, in order to avoid receiving thousands of respond messages simultaneously.

### Permanent Stop of Operation

In accordance with the examples described so far, after being moved into the state in which any transmission by the UE to the wireless communication network is prohibited, the UE is kept operative such that the UE may listen, at least during predefined periods as defined by the signaling, for any further signaling from the network annulling the state. However, in accordance with other examples, the signaling may cause the UE to permanently stop operation. For example, a user equipment, UE, 202 (see Fig. 2) is provided which accesses the wireless communication network, and responsive to a certain signaling 204 from the wireless communication network, the UE 202 enters a state in which any transmission by the UE 202 to the wireless communication network is permanently prohibited, irrespective of any further signaling from the network annulling the state. For example, responsive to the signaling 204 the UE may be ordered for a permanent stop of operation.

In accordance with examples, this may be implemented independent from the above described suspended states, or, in accordance with other examples, this may be implemented as a further stage for shutting down the UE following an initial stage in which the UE operation is only suspended. For example, in case the situation causing the suspension of the operation is not resolved after some time, rather than further deferring the annulling signaling to the UE, the MNO may decide to order the UE to permanently stop operation. When ordered for a permanent stop of operation, the UE may be ordered or forced to
- stop operation of radio transmission and reception, and/or
- move from RM-REGISTERED to RM-DEREGISTERED, and/or
- unload its battery (e.g. by means of implementation such as continued radio reception until the battery is empty), and/or
- delete all its protocol context at NAS and RRC layer (e.g. security keys and security context, assigned slice identities), and/or
- drop all arriving uplink packets at the UE side.

### Network Initiated Connection Only (NICO) mode

In accordance with the present invention, the connection management in the 5G core network (5GC) comprises the functions of establishing and releasing a signaling connection between a UE and an AMF, Access and Mobility Function (the AMF block in the 5GC may be considered as equivalent to the MME block in EPC (4G core)) over the N1 interface. This signaling connection is used to enable a NAS, Non-Access Stratum, signaling exchange between the UE and the core network.

In the 5GC, there are two states: CM-IDLE and CM-CONNECTED (see Appendix 1 and for details [3GPP TS 23.501]). A UE in CM-IDLE state has no NAS signaling connection established with the AMF over N1. The UE performs cell selection/cell reselection and PLMN selection. There is no interface (NG interface or N2/3 interface) from the core network to the radio access network for a UE in CM-IDLE. The UE in CM-IDLE state with RM-REGISTERED state still needs to
- respond to paging, and
- perform a service request procedure when the UE has uplink signaling or user data to be sent.

The present invention, in accordance with embodiments, defines a new mode, the Network Initiated Connection Only (NICO) mode. The UE is still in the RM-REGISTERED and CM-IDLE state. The purpose of the newly defined mode is not power saving, but to forbid any access of the UE to the network unless the UE is ordered to leave the NICO mode. The NICO mode may be initiated by the network without the possibility of the UE to reject to be moved into this state.

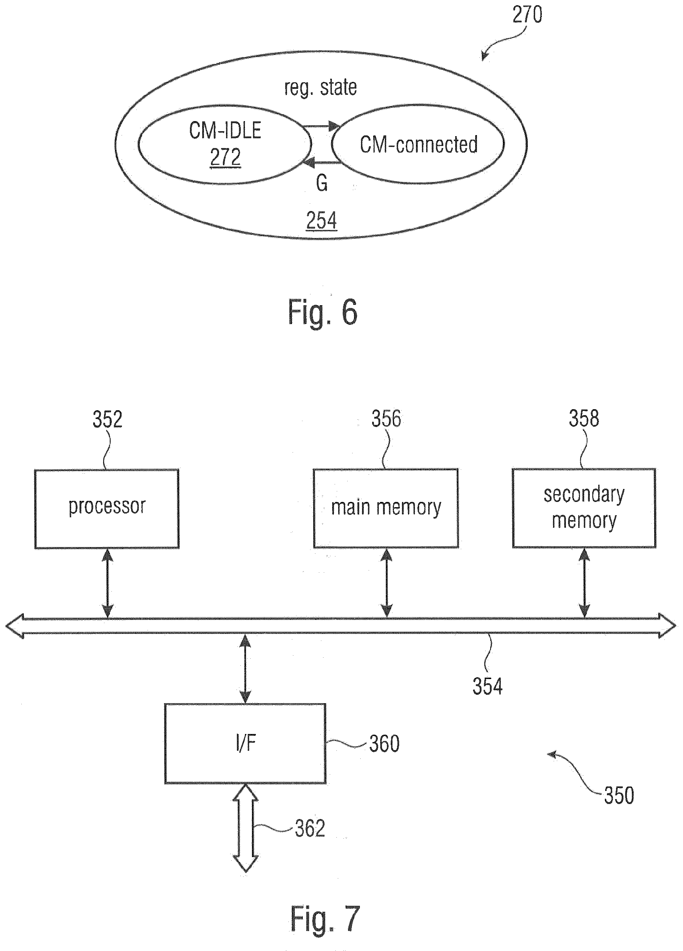

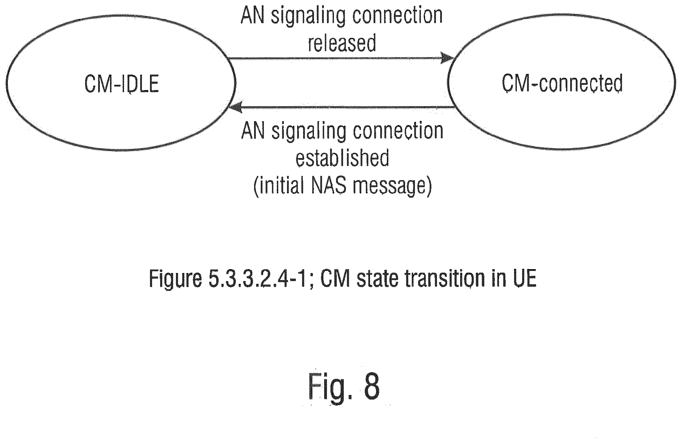

Fig. 6 illustrates the Connection Mode (CM) state diagram 270 within RM-REGISTERED state 254 (see Fig. 3). As indicated by "G", the NICO mode puts the UE in RM-REGISTERED 254 and CM-IDLE 272 state. A UE in NICO mode
- is not allowed to access the network,
- may deactivate the access stratum for transmission or any 5G radio transmission functionality,
- may reject any packet received for uplink transmission while the NAS layer may inform the higher layer (e.g. application layer) about the cause to reject the packet transmission,
- may buffer any packet received for uplink transmission until the NICO mode is suspended and the packet may be transmitted,
- may check, at configured time instances, for NAS signaling or paging from the network side.

The above behavior of the UE may also be realized by network reachability categories defined in the UE. The categories may be negotiated between the UE and the AMF for the CM-IDLE state. In one state the network may be accessible (e.g. via RACH), in the other state the network is not reachable. If reachable, still access control by the UE has to be performed considering access categories and access identities for the specific access attempt.

Once the UE loses the network coverage in NICO mode and cell search is not able to reconnect to its home PLMN or the previously used PLMN, the UE may be allowed to attach to a different network using the regular PLMN and cell selection procedure which includes Random Access as well.

### Entering NICO mode with Registration Management Procedure

In accordance with embodiments, the decision about moving a UE or a group of UEs into the NICO mode may be done by the network. The UE/UEs enter the NICO mode either during initial registration/registration update procedure or during a configuration update procedure. This registration or configuration update procedure may be performed via unicast/multicast or broadcast NAS signaling between the AMF and the UE. The NICO mode may be entered if a NICO Mode Information Element (NICO-IE) is received from the network, e.g., from an Access and Mobility Function, AMF, and/or a Session Management Function, SMF, of the wireless communication network, via a transmitter, like a base station (e.g. gNB), or via a neighboring UE using a side link, like the PC5 interface. The network signals all related parameters to the UE or the group of UEs. The network may update the NICO configuration by initiating another Registration Update procedure. The NICO mode parameters may include:
- timing information, when the UE may try to decode network related signaling or specific or pre-configured DRX or PSM configuration parameters for power saving, or
- a list of exceptional services or situations for which uplink access to the network may still be allowed e.g. an emergency call, a voice call etc., or
- a validity timer until when the NICO mode is applicable, or
- a cause value indicating the cause for moving the UE to the NICO mode.

Since the UE is not allowed to access the network by any means, mobility procedures are not supported anymore and the UE(s) may not be reachable when leaving the tracking area. In accordance with further embodiments, additional modifications are introduced. When the AMF indicates the NICO mode to a UE or a group of UEs the registration area may not be constrained by the tracking or paging area. Instead, the whole PLMN may be the AMF serving area. For this purpose, the AMF may include an "all PLMN registration area allocated" indication within the registration message. The registration message may or may not explicitly be signaled to the UE or group of UEs. The location(s) of the UE(s) is (are) not known, but overall the UE(s) are reachable within the PLMN area considering the respective notification cycle (long DRX like cycle or kind of Power Saving Mode (PSM)). Since activating/deactivating the NICO mode for a UE or group of UEs may be a rare event, the increase in overall network signaling is limited.

In case multicast and broadcast signaling without feedback is used, the message may be repeated multiple times and/or may be send with the highest reliability.

The inventive approach in accordance with the just described embodiments is advantageous as the NICO mode allows for advanced Service Level Agreements where certain devices are only uplink enabled during certain times. Even if customer, service provider and network operator are separated, the network operator has the full control of the uplink transmission attempts of the devices in NICO mode. This provides, e.g., cost savings since resource reservation or resource isolation may be avoided or reduced and the network operator may enable or disable any uplink activity for a UE or groups of UEs.

For one or more predefined exceptional services (e.g. an emergency call) the NICO mode may be temporarily suspended based on UE activity for the duration of this service or situation.

### UE Reachability Update

Since the periodic registration update or tracking area update procedure is prohibited, the network does not have any information about the availability of the UE in NICO mode. Based on an explicit request the network may ask the UE (or a group of UEs) to perform a Registration Update.

### Extension of Access Barring Framework

In accordance with further examples, existing access class barring schemes may be extended by the inventive approach described herein. A base station may broadcast access control parameters. Before each access attempt, the UE must pass the access barring check. The access control framework of the 5G Core Network assigns access classes and/or access categories and/or access identities to each access attempt. The mapping of services, slices, access classes to access categories and access identifies may be done in a fixed way or can be sent to UEs via dedicated NAS signaling.

In accordance with examples, the signaling may be extended to use multi-cast signaling to a group of UEs. The network assigs an access category to a group of UEs via NAS multicast signaling. The gNB / base station may broadcast that any UE that belongs to the respective access category is forbidden to access the network. In another example, an access category may be assigned temporarily to this group of UEs and allow, e.g., network access only in a certain time period, while forbidding access in all other times. The specific time where a UE is allowed to access the network may be further reduced or randomized or a process may define the time for the UE to become active. Such process may consider the UE identity in its calculation.

In current 5G, the main purpose of access control framework is congestion control. Compared to current 5G access control framework, in accordance with the inventive solution, the mapping to access categories is flexible and the main purpose is to prevent UEs from accessing the system for certain time periods.

In accordance with examples, the decision to bar/disable a UE or a group of UEs from the core network may be triggered via the Operation and Maintenance System (OAM) system, based on a signaling received from an application server located in a data network (DN) in the same network or located at a service provider. Such barring decision may be signaled over the top (OTT) from an application server to an application running in the CloT-UE which is in connected mode (e.g. RRC-CONNECTED). In many CIoT scenarios, the UEs may spend only a limited time in connected mode. In accordance with other examples, the decision to bar/disable a UE or a group of UEs may be initiated within the network and/or by the network operator/provider. As an alternative to the OTT procedure, the network may bar/disable a group of UEs by removing a network slice. The implementation of such decision to disable certain UEs may be limited to:
- a UE hardware type, e.g. hardware capabilities,
- a UE category, e.g. CAT NB1 / NB2 / M1 / M2 etc.,
- UEs with a certain software version,
- UEs of a predefined group (e.g. release by a certain customer or service provider),
- certain subscribers or customers identified by their SIM cards / eSIM,
- UEs supporting certain service types or certain customers,
- all UEs supporting a certain network slice.

Thus, in accordance with the inventive approach, in a more flexible manner, the network may actively order the UE(s) to be disabled (suspend or stop operation) via dedicated unicast signaling or broadcast/multicast signaling. Since the UE(s) may be in a sleep mode and receives only from time to time, the bar/disable command may be repeated to insure the completion of the process.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 7 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the claims and not by the specific details presented by way of description and explanation of the embodiments herein.

### Appendix 1: Connection Modes (CM)

### Detailed descriptions may be found in TS23.501, section 5.3.3.

### 5.3.3.2.2 CM-IDLE state

A UE in CM-IDLE state has no NAS signalling connection established with the AMF over N1. The UE performs cell selection/cell reselection according to TS 38.304 [50] and PLMN selection according to TS 23.122 [17].

There are no AN signalling connection, N2 connection and N3 connections for the UE in the CM-IDLE state.

If the UE is both in CM-IDLE state and in RM-REGISTERED state, the UE shall, unless otherwise specified in clause 5.3.4.1:
- Respond to paging by performing a Service Request procedure (see TS 23.502 [3] clause 4.2.3.2), unless the UE is in MICO mode (see clause 5.4.1.3);
- perform a Service Request procedure when the UE has uplink signalling or user data to be sent (see TS 23.502 [3] clause 4.2.3.2). Specific conditions apply for LADN, see clause 5.6.5.

### 3GPP

### Release 15 51 3GPP TS 23.501 V15.0.0 (2017·12)

The UE shall enter CM-CONNECTED state whenever an AN signalling connection is established between the UE and the AN (entering RRC Connected state over 3GPP access, or at the establishment of the UE-N3IWF connectivity over non-3GPP access). The transmission of an Initial NAS message (Registration Request, Service Request or Deregistration Request) initiates the transition from CM-IDLE to CM-CONNECTED state.

When the UE states in the AMF are CM-IDLE and RM-REGISTERED, the AMF shall:
- perform a network triggered Service Request procedure when it has signalling or mobile-terminated data to be sent to this UE, by sending a Paging Request to this UE (see TS 23.502 [3] clause 4.2.3.4), if a UE is not prevented from responding e.g. due to MICO mode or Mobility Restrictions.

The AMF shall enter CM-CONNECTED state for the UE whenever an N2 connection is established for this UE between the AN and the AMF. The reception of initial N2 message (e.g., N2 INITIAL UE MESSAGE) initiates the transition of AMF from CM-IDLE to CM-CONNECTED state.

The UE and the AMF may optimize the power efficiency and signalling efficiency of the UE when in CM-IDLE state e.g. by activating MICO mode (see clause 5.4.1.3).

### 5.3.3.2.3 CM-CONNECTED state

A UE in CM-CONNECTED state has a NAS signalling connection with the AMF over N1. A NAS signalling connection uses an RRC connection between the UE and the NG-RA. and an NGAP UE association between the AN and the AMF for 3GPP access. A UE can be in CM-CONNECTED state with an NGAP UE association that is not bound to any TNLA between the AN and the AMF. See clause 5.21.1.2 for details on the state of NGAP UE association for an UE in CM-CONNECTED state. Upon completion of a NAS signalling procedure, the AMF' may decide to release the NAS signalling connection with the UE.

In the CM-CONNECTED state, the UE shall:
- enter CM-IDLE state whenever the AN signalling connection is released (entering RRC Idle state over 3GPP access or when the release of the UE-N3IWF connectivity over non-3GPP access is detected by the UE), see TS 38.331 [28] for 3GPP access.

When the UE CM state in the AMF is CM-CONNECTED, the AMF shall:
- enter CM-IDLE state for the UE whenever the logical NGAP signalling connection and the N3 user plane connection for this UE are released upon completion of the AN Releaseprocedure as specified in TS 23.502 [3].

The AMF may keep a UE CM state in the AMF in CM-CONNECTED state until the UE de-registers from the core network.

A UE in CM-CONNECTED state can be in RRC Inactive state, see TS 38.300 [27]. When the UE is in RRC Inactive state the following applies:
- UE reachability is managed by the RAN, with assistance information from core network;
- UE paging is managed by the RAN.
- UE monitors for paging with UE's CN (5G S-TMSI) and RAN identifier.

5.3.3.2.4 SGS Connection Management State models

## Claims

1. A user equipment (202), UE,
wherein the UE (202) is configured to access a wireless communication network, wherein, responsive to a certain signaling from the wireless communication network, the UE (202) is configured to enter a state in which any transmission by the UE (202) to the wireless communication network is prohibited,
wherein the UE (202) is configured to leave the state only when the state is annulled by the wireless communication network,
wherein, responsive to the certain signaling from the wireless communication network, the UE (202) is configured enter a Network Initiated Connection Only, NICO, mode in which the UE (202) is put into or kept in the RM-REGISTERED state and is put into the CM-IDLE state, and
when operating in the NICO mode
- the UE (202) is configured to not try to reach the wireless communication network, and
- the UE (202) is configured to listen to/search for a NAS signaling or a paging from the wireless communication network only within one or more set/configured time periods or listening periods.

2. The user equipment (202), UE, of claim 1, wherein the UE (202) is configured by system information with uplink resources for a random access channel.

3. The user equipment of claim 1 or 2, wherein the UE (202) is configured to be registered with the wireless communication network using an attach procedure.

4. The user equipment of claim 3, wherein the certain signaling is provided only a) after an initial attach procedure, or b) during the attach procedure.

5. The user equipment (202), UE, of any one of the preceding claims, wherein the certain signaling causes the UE (202) to stop permanently or to temporarily suspend any transmission by the UE (202) to the wireless communication network.

6. The user equipment (202), UE, of any one of the preceding claims, wherein
- in case of a permanent stop, the UE (202) is configured to resume regular UE operation or to resume UE re-configured operation responsive to a resume signaling from the wireless communication network, and
- in case of a temporal suspension the certain signaling includes an indication of the duration of the state, and the UE (202) is configured to resume regular UE operation or to resume UE re-configured operation
• responsive to a resume signaling from the wireless communication network during the duration of the state, or
• responsive to the end of the duration of the state, or
• responsive to a signaling of physical resources to be used for a random access to the wireless communication network, or
• responsive to a certain type of signaling/message.

7. The user equipment (202), UE, of any one of the preceding claims, wherein the UE (202) remains in the NICO mode until the NICO mode is deactivated by the NAS signaling or the paging from the wireless communication network.

8. The user equipment (202), UE, of any one of the preceding claims, wherein the UE (202) has no possibility to reject to be moved into the NICO mode.

9. The user equipment (202), UE, of any one of the preceding claims, wherein, when being in NICO mode, the UE (202) is configured to
- deactivate the access stratum for a transmission or any 5G radio transmission functionality, or
- reject a packet received from a higher layer for an uplink transmission, wherein the NAS layer may inform a higher layer, e.g., the application layer, about the cause to reject the packet transmission, or
- buffer a packet until the NICO mode is suspended, or
- check, at configured time instances, for the NAS signaling or the paging from the wireless communication network, or
- perform, responsive to an explicit request from the wireless communication network, a Registration Update procedure to provide information about the availability of the UE (202) to the wireless communication network, or
- perform, responsive to an explicit request form the wireless communication network, a Service Request procedure to transition from CM-IDLE to CM-CONNECTED state, or
- to resume regular UE operation or to resume UE re-configured operation responsive to a resume signaling from the wireless communication network.

10. The user equipment (202), UE, of any one of the preceding claims, wherein the certain signaling causing the UE (202) to enter into the NICO mode is received during an initial registration procedure, during a registration update procedure or during a configuration update procedure performed by the UE (202).

11. The user equipment (202), UE, of any one of the preceding claims, wherein the certain signaling comprises a NICO Mode Information Element, NICO-IE, provided from the wireless communication network, e.g., from an Access and Mobility Function, AMF, and/or a Session Management Function, SMF, of the wireless communication network, and send to the UE (202) via a transmitter (200), like a base station, e.g. a gNB, or via a neighboring UE (202) via a side link, like the PC5 interface.

12. The user equipment (202), UE, of claim 11, wherein the NICO-IE comprises one or more of:
- timing information indicating time instances at which the UE (202) is allowed to decode wireless communication network related signaling, or
- the time/frequency/spatial resource at which the UE (202) is allowed to decode wireless communication network related signaling, or
- pre-configured DRX or PSM configuration parameters for power saving, or
- a list of exceptional services or situations for which uplink access to the wireless communication network is allowed, e.g., an emergency call, a voice call etc., or
- a validity timer indicating until when the NICO mode is applicable, or
- an indication that the whole wireless communication network, e.g. PLMN, forms an AMF serving area.

13. A wireless communication system, comprising:
a plurality of UEs (202) of any one of the preceding claims, and
a network entity (200).

14. A method, comprising
responsive to a certain signaling from a wireless communication network, moving one or more of a plurality of UEs (202), which are configured to access a wireless communication network, into a state in which at least any transmission by the UE (202) to the wireless communication network is prohibited such that the wireless communication network is not reachable by the UE (202),
wherein the UE (202) leaves the state only when the state is annulled by the wireless communication network,
wherein, responsive to the certain signaling from the wireless communication network, the UE (202) is configured enter a Network Initiated Connection Only, NICO, mode in which the UE (202) is put into or kept in the RM-REGISTERED state and is put into the CM-IDLE state, and
when operating in the NICO mode
- the UE (202) is configured to not try to reach the wireless communication network, and
- the UE (202) is configured to listen to/search for a NAS signaling or a paging from the wireless communication network only within one or more set/configured time periods or listening periods.

15. A computer program product comprising instructions which, when the program is executed by a computer, cause the computer to carry out the method of claim 14.

## Patentansprüche

1. Nutzergerät (202), UE,
wobei das UE (202) dazu konfiguriert ist, auf ein drahtloses Kommunikationsnetz zuzugreifen,
wobei das UE (202) dazu konfiguriert ist, als Reaktion auf eine bestimmte Signalisierung von dem drahtlosen Kommunikationsnetz in einen Zustand einzutreten, in dem jede Übertragung durch das UE (202) an das drahtlose Kommunikationsnetz verboten ist,
wobei das UE (202) dazu konfiguriert ist, den Zustand nur dann zu verlassen, wenn der Zustand durch das drahtlose Kommunikationsnetz aufgehoben wird,
wobei das UE (202) dazu konfiguriert ist, als Reaktion auf die bestimmte Signalisierung von dem drahtlosen Kommunikationsnetz in einen Modus nur einer vom Netz initiierten Verbindung, NICO-Modus, einzutreten, bei dem das UE (202) in den RM-REGISTERED-Zustand versetzt oder in diesem gehalten wird und in den CM-IDLE-Zustand versetzt wird, und
wenn es in dem NICO-Modus arbeitet,
- das UE (202) dazu konfiguriert ist, nicht zu versuchen, das drahtlose Kommunikationsnetz zu erreichen, und
- das UE (202) dazu konfiguriert ist, nur innerhalb einer oder mehrerer eingestellter/konfigurierter Zeitperioden oder Hörperioden nach einer NAS-Signalisierung oder einem Funkruf von dem drahtlosen Kommunikationsnetz zu hören/zu suchen.

2. Nutzergerät (202), UE, gemäß Anspruch 1, wobei das UE (202) durch Systeminformationen mit Uplink-Ressourcen für einen Direktzugriffskanal konfiguriert ist.

3. Nutzergerät gemäß Anspruch 1 oder 2, wobei das UE (202) dazu konfiguriert ist, unter Verwendung einer Anschließprozedur bei dem drahtlosen Kommunikationsnetz registriert zu werden.

4. Nutzergerät gemäß Anspruch 3, bei dem die bestimmte Signalisierung nur a) nach einer anfänglichen Anschließprozedur oder b) während der Anschließprozedur bereitgestellt wird.

5. Nutzergerät (202), UE, gemäß einem der vorhergehenden Ansprüche, bei dem die bestimmte Signalisierung das UE (202) dazu veranlasst, jede Übertragung durch das UE (202) an das drahtlose Kommunikationsnetz dauerhaft anzuhalten oder vorübergehend auszusetzen.

6. Nutzergerät (202), UE, gemäß einem der vorhergehenden Ansprüche, bei dem
- im Fall eines dauerhaften Anhaltens das UE (202) dazu konfiguriert ist, als Reaktion auf eine Wiederaufnahmesignalisierung von dem drahtlosen Kommunikationsnetz einen regulären UE-Betrieb wiederaufzunehmen oder einen neukonfigurierten UE-Betrieb wiederaufzunehmen, und
- im Fall eines vorübergehenden Aussetzens die bestimmte Signalisierung eine Angabe der Dauer des Zustands enthält und das UE (202) dazu konfiguriert ist, einen regulären UE-Betrieb wiederaufzunehmen oder einen neukonfigurierten UE-Betrieb wiederaufzunehmen
• als Reaktion auf eine Wiederaufnahmesignalisierung von dem drahtlosen Kommunikationsnetz während der Dauer des Zustands oder
• als Reaktion auf das Ende der Dauer des Zustands oder
• als Reaktion auf eine Signalisierung von physischen Ressourcen, die für einen Direktzugriff auf das drahtlose Kommunikationsnetz zu verwenden sind, oder
• als Reaktion auf einen bestimmten Typ von Signalisierung/Nachricht.

7. Nutzergerät (202), UE, gemäß einem der vorhergehenden Ansprüche, wobei das UE (202) in dem NICO-Modus verbleibt, bis der NICO-Modus durch die NAS-Signalisierung oder den Funkruf von dem drahtlosen Kommunikationsnetz deaktiviert wird.

8. Nutzergerät (202), UE, gemäß einem der vorhergehenden Ansprüche, wobei das UE (202) keine Möglichkeit hat, abzulehnen, in den NICO-Modus versetzt zu werden.

9. Nutzergerät (202), UE, gemäß einem der vorhergehenden Ansprüche, wobei das UE (202), wenn es in dem NICO-Modus ist, dazu konfiguriert ist,
- das Zugriffsstratum für eine Übertragung oder eine beliebige 5G-Funkübertragungsfunktionalität zu deaktivieren, oder
- ein von einer höheren Schicht empfangenes Paket für eine Uplink-Übertragung abzulehnen, wobei die NAS-Schicht eine höhere Schicht, z.B. die Anwendungsschicht, über die Ursache informieren kann, die Paketübertragung abzulehnen, oder
- ein Paket zwischenzuspeichern, bis der NICO-Modus ausgesetzt ist, oder
- zu konfigurierten Zeitpunkten auf die NAS-Signalisierung oder den Funkruf von dem drahtlosen Kommunikationsnetz zu prüfen, oder
- als Reaktion auf eine explizite Anforderung von dem drahtlosen Kommunikationsnetz eine Registrierungsaktualisierungsprozedur durchzuführen, um Informationen über die Verfügbarkeit des UE (202) für das drahtlose Kommunikationsnetz bereitzustellen, oder
- als Reaktion auf eine explizite Anforderung von dem drahtlosen Kommunikationsnetz eine Dienstanforderungsprozedur durchzuführen, um von dem CM-IDLE-Zustand in den CM-CONNECTED-Zustand überzugehen, oder
- als Reaktion auf eine Wiederaufnahmesignalisierung von dem drahtlosen Kommunikationsnetz einen regulären UE-Betrieb wiederaufzunehmen oder einen neukonfigurierten UE-Betrieb wiederaufzunehmen.

10. Nutzergerät (202), UE, gemäß einem der vorhergehenden Ansprüche, bei dem die bestimmte Signalisierung, die das UE (202) dazu veranlasst, in den NICO-Modus einzutreten, während einer anfänglichen Registrierungsprozedur, während einer Registrierungsaktualisierungsprozedur oder während einer Konfigurationsaktualisierungsprozedur, die durch das UE (202) durchgeführt wird, empfangen wird.

11. Nutzergerät (202), UE, gemäß einem der vorhergehenden Ansprüche, bei dem die bestimmte Signalisierung ein NICO-Modus-Informationselement, NICO-IE, aufweist, das von dem drahtlosen Kommunikationsnetz bereitgestellt wird, z.B. von einer Zugangs- und Mobilitätsfunktion, AMF, und/oder einer Sitzungsverwaltungsfunktion, SMF, des drahtlosen Kommunikationsnetzes, und über einen Sender (200), wie eine Basisstation, z.B. einen gNB, oder über ein benachbartes UE (202) über eine Seitenverbindung, wie die PC5-Schnittstelle, an das UE (202) gesendet wird.

12. Nutzergerät (202), UE, gemäß Anspruch 11, bei dem das NICO-IE eines oder mehr von Folgendem aufweist:
- Zeitgebungsinformationen, die Zeitpunkte angeben, zu denen das UE (202) eine auf das drahtlose Kommunikationsnetz bezogene Signalisierung decodieren darf, oder
- die Zeit-/Frequenz-/räumliche Ressource, bei der das UE (202) eine auf das drahtlose Kommunikationsnetz bezogene Signalisierung decodieren darf, oder
- vorkonfigurierte DRX- oder PSM-Konfigurationsparameter zum Energiesparen oder
- eine Liste von außergewöhnlichen Diensten oder Situationen, für die ein Uplink-Zugriff auf das drahtlose Kommunikationsnetz erlaubt ist, z.B. ein Notruf, ein Sprachanruf usw., oder
- einen Gültigkeitszeitgeber, der angibt, bis wann der NICO-Modus anwendbar ist, oder
- eine Angabe, dass das gesamte drahtlose Kommunikationsnetz, z.B. PLMN, einen AMF-Versorgungsbereich bildet.

13. Drahtloses Kommunikationssystem, das folgende Merkmale aufweist:
eine Mehrzahl von UEs (202) gemäß einem der vorhergehenden Ansprüche und
eine Netzentität (200).

14. Verfahren, das folgende Schritte aufweist:
als Reaktion auf eine bestimmte Signalisierung von einem drahtlosen Kommunikationsnetz, Bewegen von einem oder mehr aus einer Mehrzahl von UEs (202), die dazu konfiguriert sind, auf ein drahtloses Kommunikationsnetz zuzugreifen, in einen Zustand, in dem zumindest jede Übertragung durch das UE (202) an das drahtlose Kommunikationsnetz verboten ist, so dass das drahtlose Kommunikationsnetz durch das UE (202) nicht erreichbar ist,
wobei das UE (202) den Zustand nur dann verlässt, wenn der Zustand durch das drahtlose Kommunikationsnetz aufgehoben wird,
wobei das UE (202) dazu konfiguriert ist, als Reaktion auf die bestimmte Signalisierung von dem drahtlosen Kommunikationsnetz in einen Modus nur einer vom Netz initiierten Verbindung, NICO-Modus, einzutreten, bei dem das UE (202) in den RM-REGISTERED-Zustand versetzt oder in diesem gehalten wird und in den CM-IDLE-Zustand versetzt wird, und
wenn es in dem NICO-Modus arbeitet,
- das UE (202) dazu konfiguriert ist, nicht zu versuchen, das drahtlose Kommunikationsnetz zu erreichen, und
- das UE (202) dazu konfiguriert ist, nur innerhalb einer oder mehrerer eingestellter/konfigurierter Zeitperioden oder Hörperioden nach einer NAS-Signalisierung oder einem Funkruf von dem drahtlosen Kommunikationsnetz zu hören/zu suchen.

15. Computerprogrammprodukt, das Befehle aufweist, die, wenn das Programm durch einen Computer ausgeführt wird, den Computer dazu veranlassen, das Verfahren gemäß Anspruch 14 auszuführen.

## Revendications

1. Equipement d'utilisateur (202), UE,
dans lequel l'UE (202) est configuré pour accéder à un réseau de communication sans fil,
dans lequel, en réponse à une certaine signalisation du réseau de communication sans fil, l'UE (202) est configuré pour entrer dans un état dans lequel est interdite toute transmission par l'UE (202) vers le réseau de communication sans fil,
dans lequel l'UE (202) est configuré pour sortir de l'état uniquement lorsque l'état est annulé par le réseau de communication sans fil,
dans lequel, en réponse à la certaine signalisation du réseau de communication sans fil, l'UE (202) est configuré pour entrer dans un mode de Connexion Initiée par le Réseau Uniquement, NICO, dans lequel l'UE (202) est mis ou maintenu dans l'état RM-REGISTERED et est mis dans l'état CM-IDLE, et
lorsqu'il fonctionne en mode NICO
- l'UE (202) est configuré pour ne pas essayer d'atteindre le réseau de communication sans fil, et
- l'UE (202) est configuré pour écouter/rechercher une signalisation NAS ou une radiomessagerie du réseau de communication sans fil uniquement dans une ou plusieurs périodes de temps ou périodes d'écoute établies/configurées.

2. Equipement d'utilisateur (202), UE, selon la revendication 1, dans lequel l'UE (202) est configuré par des informations de système avec des ressources de liaison montante pour un canal d'accès aléatoire.

3. Equipement d'utilisateur selon la revendication 1 ou 2, dans lequel l'UE (202) est configuré pour être enregistré au réseau de communication sans fil à l'aide d'une procédure de connexion.

4. Equipement d'utilisateur selon la revendication 3, dans lequel la certaine signalisation est fournie uniquement a) après une procédure de connexion initiale, ou b) pendant la procédure de connexion.

5. Equipement d'utilisateur (202), UE, selon l'une quelconque des revendications précédentes, dans lequel la certaine signalisation amène l'UE (202) à arrêter définitivement ou à suspendre temporairement toute transmission par l'UE (202) vers le réseau de communication sans fil.

6. Equipement d'utilisateur (202), UE, selon l'une quelconque des revendications précédentes, dans lequel
- en cas d'arrêt permanent, l'UE (202) est configuré pour reprendre le fonctionnement régulier de l'UE ou pour reprendre le fonctionnement reconfiguré de l'UE en réponse à une signalisation de reprise du réseau de communication sans fil, et
- en cas de suspension temporelle, la certaine signalisation comporte une indication de la durée de l'état, et l'UE (202) est configuré pour reprendre le fonctionnement régulier de l'UE ou pour reprendre le fonctionnement reconfiguré de l'UE
• en réponse à une signalisation de reprise du réseau de communication sans fil pendant la durée de l'état, ou
• en réponse à la fin de la durée de l'état, ou
• en réponse à une signalisation de ressources physiques à utiliser pour un accès aléatoire au réseau de communication sans fil, ou
• en réponse à un certain type de signalisation/message.

7. Equipement d'utilisateur (202), UE, selon l'une quelconque des revendications précédentes, dans lequel l'UE (202) reste en mode NICO jusqu'à ce que le mode NICO soit désactivé par la signalisation NAS ou la radiomessagerie du réseau de communication sans fil.

8. Equipement d'utilisateur (202), UE, selon l'une quelconque des revendications précédentes, dans lequel l'UE (202) n'a aucune possibilité de refuser d'être déplacé en mode NICO.

9. Equipement d'utilisateur (202), UE, selon l'une quelconque des revendications précédentes, dans lequel, lorsqu'il est en mode NICO, l'UE (202) est configuré pour
- désactiver le strate d'accès pour une transmission ou toute fonctionnalité de transmission radio 5G, ou
- rejeter un paquet reçu d'une couche supérieure pour une transmission en liaison montante, où la couche NAS peut informer une couche supérieure, par exemple la couche d'application, de la cause du rejet de la transmission du paquet, ou
- mettre en mémoire tampon un paquet jusqu'à ce que le mode NICO soit suspendu, ou
- vérifier, à des moments configurés, la signalisation NAS ou la radiomessagerie du réseau de communication sans fil, ou
- effectuer, en réponse à une demande explicite du réseau de communication sans fil, une procédure de Mise à Jour d'Enregistrement pour fournir des informations sur la disponibilité de l'UE (202) au réseau de communication sans fil, ou
- effectuer, en réponse à une demande explicite du réseau de communication sans fil, une procédure de Demande de Service pour une transition de l'état CM-IDLE à l'état CM-CONNECTED, ou
- pour reprendre le fonctionnement régulier de l'UE ou pour reprendre l'opération reconfigurée de l'UE en réponse à une signalisation de reprise du réseau de communication sans fil.

10. Equipement d'utilisateur (202), UE, selon l'une quelconque des revendications précédentes, dans lequel la certaine signalisation amenant l'UE (202) à entrer en mode NICO est reçue pendant une procédure d'enregistrement initiale, pendant une procédure de mise à jour d'enregistrement ou pendant une procédure de mise à jour de configuration effectuée par l'UE (202).

11. Equipement d'utilisateur (202), UE, selon l'une quelconque des revendications précédentes, dans lequel la certaine signalisation comprend un Elément d'Information de Mode NICO, NICO-IE, fourni par le réseau de communication sans fil, par exemple par une Fonction d'Accès et de Mobilité, AMF, et/ou une Fonction de Gestion de Session, SMF, du réseau de communication sans fil, et envoyé à l'UE (202) par l'intermédiaire d'un émetteur (200), tel qu'une station de base, par exemple un gNB, ou par l'intermédiaire d'un UE voisin (202) par l'intermédiaire d'une liaison latérale, telle que l'interface PC5.

12. Equipement d'utilisateur (202), UE, selon la revendication 11, dans lequel le NICO-IE comprend un ou plusieurs parmi:
- les informations de temporisation indiquant les moments auxquels l'UE (202) est autorisé à décoder la signalisation relative au réseau de communication sans fil, ou
- la ressource temporelle/de fréquence/spatiale à laquelle l'UE (202) est autorisé à décoder la signalisation relative au réseau de communication sans fil, ou
- les paramètres de DRX préconfigurés ou de configuration de PSM pour l'économie d'énergie, ou
- une liste de services ou de situations exceptionnels pour lesquels l'accès en liaison montante au réseau de communication sans fil est autorisé, par exemple un appel d'urgence, un appel vocal, etc., ou
- un temporisateur de validité indiquant le moment jusqu'auquel le mode NICO est applicable, ou
- une indication que tout le réseau de communication sans fil, par exemple PLMN, forme une zone de service AMF.

13. Système de communication sans fil, comprenant:
une pluralité d'UE (202) selon l'une quelconque des revendications précédentes, et
une entité de réseau (200).

14. Procédé, comprenant le fait de
en réponse à une certaine signalisation d'un réseau de communication sans fil, déplacer un ou plusieurs UE (202) parmi une pluralité d'UE qui sont configurés pour accéder à un réseau de communication sans fil, à un état dans lequel au moins toute transmission par l'UE (202) vers le réseau de communication sans fil est interdite de sorte que le réseau de communication sans fil ne puisse pas être atteint par l'UE (202),
dans lequel l'UE (202) sort de l'état uniquement lorsque l'état est annulé par le réseau de communication sans fil,
dans lequel, en réponse à la certaine signalisation du réseau de communication sans fil, l'UE (202) est configuré pour entrer dans un mode de Connexion Initiée par le Réseau Uniquement, NICO, dans lequel l'UE (202) est mis ou maintenu dans l'état de RM-REGISTERED et est mis dans l'état de CM-IDLE, et
lorsqu'il fonctionne en mode NICO
- l'UE (202) est configuré pour ne pas essayer d'atteindre le réseau de communication sans fil, et
- l'UE (202) est configuré pour écouter/rechercher une signalisation NAS ou une radiomessagerie du réseau de communication sans fil uniquement dans une ou plusieurs périodes de temps ou périodes d'écoute établies/configurées.

15. Produit de programme d'ordinateur comprenant des instructions qui, lorsque le programme est exécuté par un ordinateur, amènent l'ordinateur à réaliser le procédé selon la revendication 14.
